# EUROPÄISCHE PATENTSCHRIFT

(11) **EP 2 781 818 B1**
(45) Veröffentlichungstag und Bekanntmachung des Hinweises auf die Patenterteilung: **16.03.2016**
(21) Anmeldenummer: 14160281.3
(22) Anmeldetag: 17.03.2014
(51) Int. Cl.: F16L 37/00, F16L 37/32

(54) **Kupplung für tiefkalte verflüssigte Medien**
Coupling for extremely cold liquefied media
Couplage pour des gaz liquéfiés à très basse température

(30) Priorität: 19.03.2013 DE 102013004731
(43) Veröffentlichungstag der Anmeldung: 24.09.2014
(73) Patentinhaber: Messer France S.A.S., 92816 Puteaux Cedex (FR)
(72) Erfinder: Frère, Émilien, 77100 Meaux (FR)
(74) Vertreter: Münzel, Joachim R.

(56) Entgegenhaltungen:
- US-A1- 2006 278 839
- US-B1- 7 252 112

## Beschreibung

Die Erfindung betrifft eine Kupplung für tiefkalte verflüssigte Medien zum Verbinden vakuumisolierter Leitungen über eine Kupplungsdose und einen Kupplungsstecker, die jeweils mit einem Rückschlagventil ausgerüstet sind, das im entkuppelten Zustand eine im jeweiligen Kupplungsteil angeordnete Durchströmöffnung gegen das Eindringen von Umgebungsluft abdichtet, diese jedoch beim Verbinden selbsttätig öffnet.

Kupplungen zum Verbinden von Leitungen für tiefkalt verflüssigte Medien sind bekannt. Derartige Kupplungen kommen insbesondere dann zum Einsatz, wenn ortsfeste Tankanlagen mit kryogenen Medien aus einem Tankfahrzeug betankt werden.

In der US 4,335,747 A1 wird eine Kupplung mit Kupplungsstecker und Kupplungsdose beschrieben, die jeweils mit einem stirnseitig angeordneten Kugelhahn ausgerüstet sind und mittels Bolzen miteinander verbunden werden. Der Kupplungsvorgang erfolgt hierbei in den zwei Arbeitsschritten Abdichten nach außen und Verbinden der Durchflusseinrichtungen. Dabei sind jedoch separate Absperrventile für die Durchflussleitungen erforderlich. Hinzu kommt, dass die Kugelhähne nicht vakuumisoliert sind und beim Entkoppeln austretende kryogenen Flüssigkeit zum Einfrieren der Kugelhähne führt. Nach ähnlichem Prinzip wie die US 4,335,747 aufgebaute Kupplung sind die in DE 41 04 711 A1 und der DE 42 19 912 A1 beschriebenen Kupplungen aufgebaut.

Gegenstand der DE 195 16 029 C1 ist eine Kupplung für tiefkalte verflüssigte Medien, bei der vakuumisolierte Leitungsenden über einen Kupplungsstecker und eine Kupplungsdose miteinander verbunden werden. Die Leitungsenden weisen an ihren Stirnseiten axial verschiebbare Dichtmittel auf, die bei getrennter Kupplung jeweils durch eine Feder in eine Position verschoben werden, bei der sie das jeweilige Leitungsende gegen das Eindringen von Umgebungsluft abdichten. Beim Einführen des Kupplungssteckers in die Kupplungsdose werden die Dichtmittel selbsttätig gegen die Kraft der Feder in ihre jeweilige Öffnungsposition verschoben, bei der sie einen Strömungsweg zum jeweils anderen Kupplungsteil freigeben, wobei die miteinander verbundenen Strömungswege nach außen abgedichtet sind. Um eine dauerhafte Verbindung zu schaffen, werden die Kupplungsteile mittels einer Überwurfmutter verschraubt. Bei diesem Gegenstand wird eine Vereisung der Leitungsenden im entkoppelten Zustand ebenso vermieden wie ein Vereisen der Kupplung während des Betriebes.

Dokumente US 2006/0278839 A1 und US 7 252 112 B1 offenbaren Vorrichtungen gemäß dem Oberbegriff von Anspruch 1.

Der Erfindung liegt daher die Aufgabe zugrunde, eine Kupplung für kryogene Medien zu schaffen, die einen wirkungsvollen Schutz gegen das Abreißen der Leitung bietet, und zugleich eine schnelle Betankung ermöglicht.

Diese Aufgabe ist erfindungsgemäß mit einer Kupplung mit den in Anspruch 1 aufgeführten Merkmalen gelöst. Vorteilhafte Weiterbildungen der Erfindung sind in den Unteransprüchen angegeben.

Vorder-und Hinterabschnitt der Kupplungsdose sind so ausgebildet, dass sie sich bei einer vorgegebenen Zugspannung voneinander trennen, woraufhin sich die Rückschlagventile in Kupplungsdose und Kupplungsstecker selbsttätig in ihre jeweilige Schließposition bewegen. Das unkontrollierte Ausströmen von kryogenem Medium wird auf diese Weise wirkungsvoll verhindert. Der Grenzwert der Zugspannung, oberhalb dessen sich der Vorderabschnitt vom Hinterabschnitt der Kupplungsdose bestimmungsgemäß trennt, wird dabei den Umständen entsprechend gewählt, insbesondere muss er niedriger sein, als die Zugfestigkeit der übrigen Komponenten der Kupplung bzw. der mit ihr verbundenen Leitung, jedoch hinreichend groß, um üblichen, während eines normalen Tankvorgangs auftretenden Belastungen widerstehen zu können. Die erfindungsgemäße Kupplung ist besonders geeignet zur Herstellung einer Strömungsverbindung zwischen zwei Leitungen für Flüssigstickstoff oder für ein anderes tiefkalt verflüssigtes Gas, wie beispielsweise verflüssigtes Edelgas oder Erdgas. Insbesondere eignet ist die erfindungsgemäße Kupplung als Schnellkupplung für die Betankung eines mit einem Vorratsbehälter für ein tiefkalt verflüssigtes Medium ausgerüstetes Kühlfahrzeug aus einem ortsfesten Vorratstank einsetzbar, da sie aufgrund ihres einfachen und nur geringe Strömungswiderstände aufweisenden Aufbaus ein schnelles und unkompliziertes Verbinden der Leitungen sowie eine rasche Betankung ermöglich, und dennoch einen hohen Schutz gegen einen unkontrollierten Austritt von kryogener Flüssigkeit bietet.

Ein Permanentmagnet eine Haltekraft auf einen entsprechenden ferromagnetischen Bereich des anderen Kupplungsabschnitts vermittelt. Dabei handelt es sich beispielsweise einen im wesentlichen aus Eisen bestehenden Abschnitt oder seinerseits um einen Permanentmagneten. Der Permanentmagnet und der dazu korrespondierende ferromagnetische Bereich können sich beispielsweise jeweils ringförmig um den eigentlichen Kupplungsbereich erstrecken, oder es können mehrere Permanentmagnete in gleichmäßigen Winkelabständen angeordnet sein.

Bevorzugt umfassen die Mittel zum Verbinden des Vorderabschnitts der Kupplungsdose mit dem Kupplungsstecker einen Bajonettverschluss oder einen Schraubverschluss, beispielsweise eine Überwurfmutter, die auf ein am Kupplungsstecker oder dem Vorderabschnitt außenseitig angebrachtes Gewinde gezogen wird. Auf diese Weise bleiben Vorderabschnitt der Kupplungsdose und Kupplungsstecker auch nach Ablösen des Hinterabschnitts fest miteinander verbunden.

Das Rückschlagventil des Kupplungsstreckers und das Rückschlagventil der Kupplungsdose ist bevorzugt jeweils mit einem axial verschiebbaren Schließkörper, beispielsweise in Form eines Tellers oder einer Kugel, ausgerüstet, der gegen die Wirkung einer Rückstellkraft von einem die Durchströmöffnung des jeweiligen Kupplungsteil abdichtenden Schließzustand in einen die Durchströmöffnung freigebenden Öffnungszustand verschiebbar ist. Dabei sind die Schließelemente derart ausgestaltet, dass sie sich beim Verbinden der Kupplungsteile gegenseitig in ihren jeweiligen Öffnungszustand verschieben und dabei einen Strömungsweg zwischen den Leitungen, die durch die Kupplung miteinander verbunden sind, freigeben. Beim Trennen der Kupplungsdose vom Kupplungsstecker, aber auch beim Trennen des Hinterabschnitts vom Vorderabschnitt der Kupplungsdose, bewegen sich die Schließkörper dagegen selbsttätig in ihren jeweiligen Schließzustand und sperren damit die Durchströmöffnungen beider Kupplungsteile ab.

Besonders zweckmäßig ist es, wenn am Vorderabschnitt und/oder dem Hinterabschnitt der Kupplungsdose ein Dichtelement angeordnet ist, beispielsweise ein Dichtring, der die Gasdichtigkeit der Kupplungsverbindung gewährleistet. Der Dichtring ist bevorzugt temperaturfest ausgebildet und beispielsweise aus PTFE gefertigt.

Anhand der Zeichnungen soll ein Ausführungsbeispiel der Erfindung näher erläutert werden. In schematischen Ansichten zeigen, jeweils im Längsschnitt:
- Fig. 1:: Die voneinander getrennten Bestandteile einer Kupplungsdose einer erfindungsgemäßen Kupplung,
- Fig. 2:: die zusammengefügte Kupplungsdose und der Kupplungsstecker der Kupplung aus Fig. 1 im entkoppelten Zustand,
- Fig. 3:: Die Kupplung aus Fig. 1 und Fig. 2 im geschlossenen Zustand
- Fig. 4:: Die Kupplung aus Fig. 1 bis 3 nach einem den Abreißschutz auslösenden Ereignis.

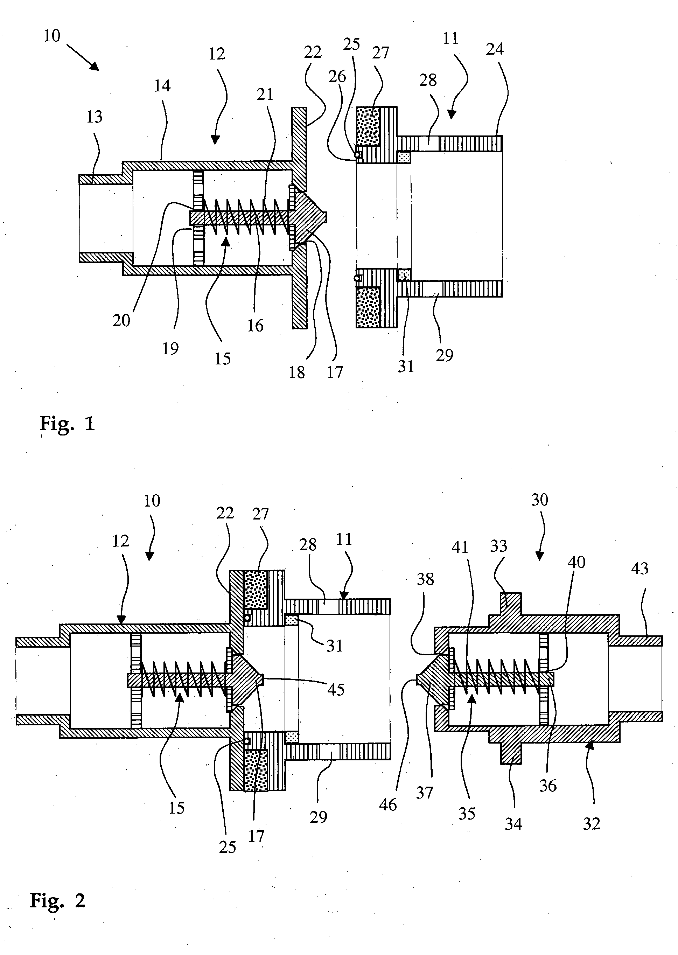

Die in Fig. 1 bis 4 gezeigte, als Schnellkupplung ausgebildete Kupplung weist eine Kupplungsdose 10 mit einem Vorderabschnitt 11 und einen mit diesem verbindbaren Hinterabschnitt 12 auf. Der mit einem Anschlussstutzen 13 zum Verbinden mit einer hier nicht gezeigten Leitung für ein kryogenes Medium, beispielsweise einer Leitung für flüssigen Stickstoff, ausgerüstete Hinterabschnitt 12 weist ein thermisch gut isoliertes, beispielsweise vakuumisoliertes Gehäuse 14 auf, in dessen Innern ein Rückschlagventil 15 angeordnet ist. Das Rückschlagventil 15 umfasst einen Verschlusskörper 16 mit einem Schließteller 17, der bei geöffneter Kupplung eine Ausmündung 18 des Hinterabschnitts 12 unter der Wirkung einer Druckfeder 21 kraftschlüssig gasdicht verschließt. Die Druckfeder 21 erstreckt sich radial außenseitig am Verschlusskörper 16 zwischen dem Schließteller 17 und einem fest im Innern des Gehäuses 14 montierten Ventilsitz 19, der eine zentrale Bohrung 20 aufweist, durch den der Verschlusskörper 16 axial begrenzt beweglich hindurchgeführt ist. An der vom Anschlussstutzen 13 gegenüberliegenden Stirnseite des Gehäuses 14 befindet sich zum Verbinden mit dem Vorderabschnitt 11 ein Flansch 22, der Ausführungsbeispiel aus einem ferromagnetischen Material, beispielsweise aus Eisen oder einem stark eisenhaltigen Material, gefertigt ist.

Der Vorderabschnitt 11 der Kupplungsdose 10 umfasst ein gleichfalls mit einer Wärmeisolierung ausgerüstetes Gehäuse 24, das an seinem dem Hinterabschnitt 12 zugewandten Ende eine mit einem PTFE - Dichtring 25 ausgerüstete Dichtfläche 26 aufweist. Die Dichtfläche 26 besteht aus einem ferromagnetischen Material, beispielsweise Eisen oder ein überwiegend aus Eisen bestehendes Material. Sie ist einstückig mit dem Gehäuse 24 ausgebildet oder auf diesem mittels geeigneter Verbindungsmittel, beispielsweise durch Verkleben, Verschweißen oder Verschrauben, befestigt. Auf die Dichtfläche ist ein ringförmiger Permanentmagnet 27 montiert, der aufgrund seiner Magnetkraft am Hinterabschnitt 26 fixiert ist. Auf dem vorderen Teil des Vorderabschnitts 11 sind Verbindungselemente zum festen, jedoch lösbaren Verbinden mit dem Kupplungsstecker 30 der Kupplung angeordnet; im Ausführungsbeispiel handelt es sich dabei um Schlitze 28, 29 eines Bajonettverschlusses. Ein weiterer, im Innern des Vorderabschnitts 11 angeordneter Dichtring 31 aus PTFE dient zur Gewährleistung der Gasdichtigkeit nach der Herstellung einer Verbindung mit dem Kupplungsstecker 30.

Die zusammengesetzte Kupplungsdose 10 ist in Fig. 2 gezeigt. Hinterabschnitt 12 und Vorderabschnitt 11 sind durch die Kraftwirkung des Permanentmagneten 27 auf den ferromagnetischen Flansch 22 und die Dichtfläche 26 fest miteinander verbunden, und können nur durch eine die Magnetkraft des Permanentmagneten übersteigende Zugkraft wieder voneinander gelöst werden. Der zwischen Vorderabschnitt 11 und Hinterabschnitt 12 verpresste Dichtring 25 sorgt dabei dafür, dass die Verbindung gasdicht ist. Anstelle einer magnetischen Verbindung ist im Übrigen im Rahmen der Erfindung ebenso jede andere Verbindung vorstellbar, die bei Anlegen einer definierten, vorgegebenen Zugspannung die Verbindung zwischen Hinterabschnitt 12 und Vorderabschnitt 11 löst, beispielsweise eine Klebeverbindung.

Der gleichfalls in Fig. 2 gezeigte Kupplungsstecker 30 umfasst ein thermisch isoliertes Gehäuse 32, das zur Herstellung einer festen, jedoch lösbaren Steck-Drehverbindung mit der Kupplungsdose 10 mit Knöpfen 33, 34 ausgerüstet ist, die mit den Schlitzen 28, 29 korrespondieren. Ebenso wie im Hinterabschnitt 12 der Kupplungsdose 10 ist im Innern des Kupplungssteckers 30 ein Rückschlagventil 36 angeordnet. Das Rückschlagventil 35 ist ähnlich wie das Rückschlagventil 15 der Kupplungsdose 10 aufgebaut und umfasst einen Verschlusskörper 36 mit einem Schließteller 37, der in dem in Fig. 2 gezeigten Zustand eine Ausmündung 38 des Kupplungssteckers 30 unter der Wirkung einer Druckfeder 41 kraftschlüssig gasdicht verschließt. Die Druckfeder 41 erstreckt sich radial außenseitig am Verschlusskörper zwischen Schließteller 37 und einem fest im Gehäuse 32 montierten Ventilsitz 39, der mit einer zentralen Bohrung 40 ausgerüstet ist, durch die der Verschlusskörper axial begrenzt beweglich geführt ist. Des Weiteren besitzt das Gehäuse 32 einen Anschlussstutzen 43 zum Verbinden mit einer hier nicht gezeigten Leitung für ein kryogenes Medium.

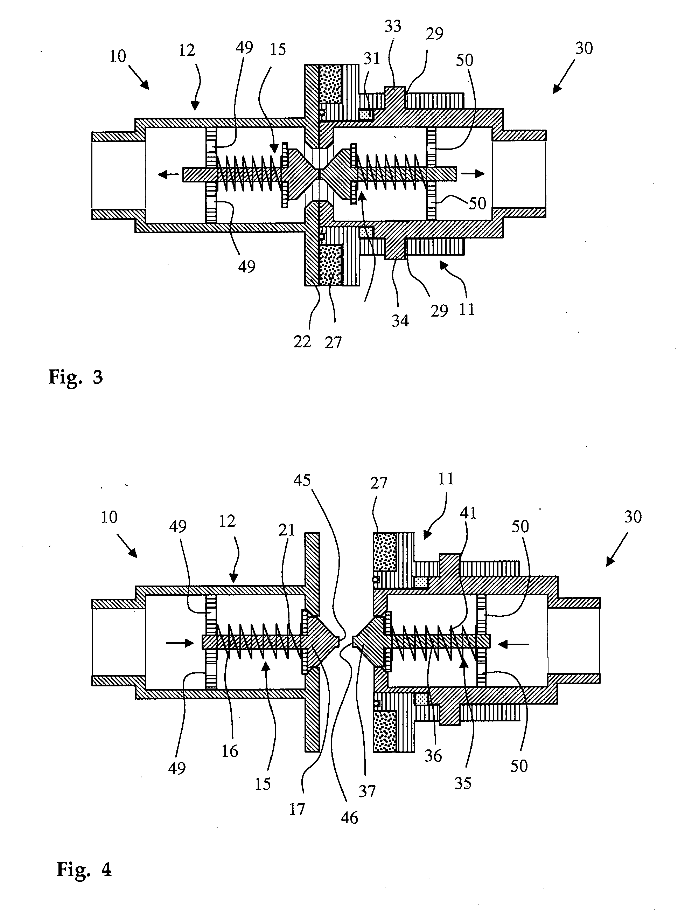

In Fig. 3 ist die Kupplung im bestimmungsgemäß gekuppelten Zustand gezeigt. In diesem Zustand sind die Knöpfe 33, 34 des Bajonettverschlusses im Eingriff mit den entsprechenden Schlitzen 28, 29 und stellen auf diese Weise eine feste Verbindung zwischen den Kupplungsteilen 10, 30 her. Andere Arten der Kraftaufbringung zum Zusammenstecken und Verbinden von Kupplungsdose und Kupplungsstecker liegen im Übrigen ebenfalls im Rahmen der Erfindung, wie beispielsweise die in der DE 195 16 029 C1 näher beschriebene Verbindung mittels Überwurfmutter. An ihren einander zugewandten Seiten sind die Schließteller 17, 37 mit Stößeln 45, 46 ausgerüstet, die beim Zusammenstecken von Kupplungsdose 10 und Kupplungsstecker 30 gegeneinander gepresst werden und dabei, wie im Fig. 3 durch Pfeile angedeutet, die Verschlusskörper 16, 36 gegen die Wirkung der Federkraft der Druckfedern 21, 41 in ihren jeweiligen Öffnungszustand verschieben. Dadurch wird zugleich im Bereich der Ausmündungen 18, 38 ein Strömungsweg zwischen den Innenräumen von Kupplungsdose 10 und Kupplungsstecker 30 eröffnet. Um eine Strömungsverbindung in Richtung der Anschlussstutzen 13, 43 zu schaffen, sind die im Innern von Kupplungsdose 10 und Kupplungsstecker 30 angeordneten Ventilsitze 19, 39 jeweils mit Durchströmöffnungen 49, 50 ausgerüstet. Im Bereich der Verbindung überlappen sich in radialer Hinsicht das Gehäuse 32 des Kupplungssteckers und das Gehäuse 24 des Vorderabschnitts 11 der Kupplungsdose 10. Die thermisch isolierte Ausgestaltung der Gehäuse 24, 32 bevorzugt mittels einer Vakuum ring kammer, verhindert dabei wirkungsvoll ein Vereisen der Kupplung während des Durchströmens von kryogenem Medium.

In Fig. 4 ist eine Kupplung nach Eintreten eines den Abreißschutz auslösenden Ereignisses gezeigt. Als "ein den Abreißschutz auslösendes Ereignis" wird hier ein Ereignis verstanden, bei dem eine axiale Zugkraft auf die Kupplung wirkt, die größer ist als die Haltekraft des Permanentmagneten 27 auf den Flansch 22. In diesem Fall trennt sich der Hinterabschnitt 12 der Kupplungsdose 10 von dem nach wie vor fest mit dem Kupplungsstecker 30 verbundenen Vorderabschnitt 11 der Kupplungsdose 10. Dabei geht der Kontakt zwischen den Stoßflächen 45, 46 der Verschlusskörper 16, 36 der Rückschlagventile 15, 35 verloren und die Rückschlagventile 15, 35 gehen unter der Wirkung der Druckfedern 21, 41 selbsttätig in ihre Schließposition (wie in Fig. 4 durch Pfeile angedeutet); die Strömungsverbindung zwischen dem Hinterabschnitt 12 der Kupplungsdose 10 und dem Kupplungsstecker 30 wird geschlossen. Auf diese Weise wird beim Auftreten eines derartigen Ereignisses wirkungsvoll verhindert, dass die Kupplung oder ein Teil der Leitung bricht und das durch die Leitung transportierte kryogene Medium unkontrolliert in die Umgebung austritt.

### Bezugszeichenliste

- 10.: Kupplungsdose
- 11.: Vorderabschnitt
- 12.: Hinterabschnitt
- 13.: Anschlussstutzen
- 14.: Gehäuse (des Hinterabschnitts)
- 15.: Rückschlagventil
- 16.: Verschlusskörper
- 17.: Schließteller
- 18.: Ausmündung
- 19.: Ventilsitz
- 20.: Zentrale Bohrung
- 21.: Druckfeder
- 22.: Flansch
- 23.: -
- 24.: Gehäuse (des Vorderabschnitts)
- 25.: Dichtring
- 26.: Dichtfläche
- 27.: Permanentmagnet
- 28.: Schlitz
- 29.: Schlitz
- 30.: Kupplungsstecker
- 31.: Dichtring
- 32.: Gehäuse (des Kupplungssteckers)
- 33.: Knopf
- 34.: Knopf
- 35.: Rückschlagventil
- 36.: Verschlusskörper
- 37.: Schließteller
- 38.: Ausmündung
- 39.: Ventilsitz
- 40.: zentrale Bohrung
- 41.: Druckfeder
- 42.: -
- 43.: Anschlussstutzen
- 44.: -
- 45.: Stößel.
- 46.: Stößel
- 47.: -
- 48.: -
- 49.: Durchströmöffnung
- 50.: Durchströmöffnung

## Patentansprüche

1. Kupplung für tiefkalte verflüssigte Medien zum Verbinden vakuumisolierter Leitungen über eine Kupplungsdose (10) und einen Kupplungsstecker (30), die jeweils mit einem Rückschlagventil (15, 35) ausgerüstet sind, das im entkuppelten Zustand eine im jeweiligen Kupplungsteil (10, 30) angeordnete Durchströmöffnung (18, 38) gegen das Eindringen von Umgebungsluft abdichtet, diese jedoch beim Verbinden selbsttätig öffnet,
wobei die Kupplungsdose (10) einen mit Mitteln zum Verbinden mit dem Kupplungsstecker (30) aufweisenden Vorderabschnitt (11) und einen das Rückschlagventil (15) aufweisenden Hinterabschnitt (12) umfasst, und der Vorderabschnitt (11) fest, jedoch unter Aufbietung einer vorgegebenen Zugspannung lösbar mit dem Hinterabschnitt (12) verbunden ist, **dadurch gekennzeichnet,.**
**, dass** der Vorderabschnitt (11) mittels eines Permanentmagneten (27) mit dem Hinterabschnitt (12) verbunden ist.

2. Kupplung nach Anspruch 1 oder 2, **dadurch gekennzeichnet, dass** die Mittel zum Verbinden des Vorderabschnitts (11) mit dem Kupplungsstecker (30) einen Bajonettverschluss oder einen Schraubverschluss umfasst.

3. Kupplung nach einem der vorhergehenden Ansprüche, **dadurch gekennzeichnet, dass** das Rückschlagventil (35) des Kupplungsstreckers (30) und/oder das Rückschlagventil (15) der Kupplungsdose (10) jeweils mit einem axial verschiebbaren Schließkörper (16, 36) ausgerüstet ist, der gegen die Wirkung einer Rückstellkraft von einem die Durchströmöffnung (18, 38) des jeweiligen Kupplungsteils (10, 30) abdichtenden Schließzustand in einen die Durchströmöffnung (18, 38) freigebenden Öffnungszustand verschiebbar ist, wobei die Schließkörper (16, 36) derart ausgestaltet sind, dass sie sich beim Verbinden von Kupplungsdose (10) mit dem Kupplungsstecker (30) gegenseitig in den jeweiligen Öffnungszustand, unter Freigabe eines Strömungsweges zwischen den verbundenen Leitungen verschieben, jedoch beim Trennen der Kupplungsdose (10) vom Kupplungsstecker (30) oder beim Trennen des Hinterabschnitts (12) vom Vorderabschnitt (11) der Kupplungsdose selbsttätig in ihren Schließzustand bewegen.

4. Kupplung nach einem der vorhergehenden Ansprüche, **dadurch gekennzeichnet, dass** am Vorderabschnitt (11) und/oder dem Hinterabschnitt (12) der Kupplungsdose (10) ein Dichtelement zum Herstellen einer gasdichten Verbindung mit dem jeweils anderen Abschnitt (12, 11) der Kupplungsdose angeordnet ist.

## Claims

1. Coupling for extremely cold liquefied media, for connecting vacuum-insulated lines via a coupling socket (10) and a coupling plug (30) which are each equipped with a check valve (15, 35) which, in the uncoupled state, seals a throughflow opening (18, 38) arranged in the respective coupling part (10, 30) against ingress of ambient air, but which automatically opens this opening upon connection, wherein the coupling socket (10) comprises a forward section (11) having means for connecting to the coupling plug (30) and a rear section (12) having the check valve (15), and the forward section (11) is securely connected to the rear section (12), but can be separated therefrom when a predefined tensile stress is provided, **characterized**
**in that** the forward section (11) is connected to the rear section (12) by means of a permanent magnet (27).

2. Coupling according to Claim 1 or 2, **characterized in that** the means for connecting the forward section (11) to the coupling plug (30) comprises a bayonet connection or a screw connection.

3. Coupling according to either of the preceding claims, **characterized in that** the check valve (35) of the coupling plug (30) and/or the check valve (15) of the coupling socket (10) is in each case equipped with an axially displaceable closure body (16, 36) which can be displaced, against the effect of a return force, from a closed position, sealing off the throughflow opening (18, 38) of the respective coupling part (10, 30), into an open state, freeing the throughflow opening (18, 38), wherein the closure bodies (16, 36) are configured such that, when the coupling socket (10) is connected to the coupling plug (30), they displace one another into the respective open state, freeing a flow path between the connected lines, but, when the coupling socket (10) is separated from the coupling plug (30) or when the rear section (12) is separated from the forward section (11) of the coupling socket, they automatically move into their closed positions.

4. Coupling according to one of the preceding claims, **characterized in that** there is arranged, on the forward section (11) and/or the rear section (12) of the coupling socket (10), a sealing element for establishing a gas-tight connection with the respective other section (12, 11) of the coupling socket.

## Revendications

1. Couplage pour des gaz liquéfiés à très basse température pour le couplage de conduites isolées sous vide au moyen d'un connecteur femelle (10) et d'un connecteur mâle (30), qui sont respectivement équipés d'une soupape antiretour (15, 35) qui, dans l'état découplé, obture hermétiquement une ouverture d'écoulement (18, 38) disposée dans la partie de couplage respective (10, 30) contre la pénétration d'air ambiant, mais ouvre cependant celle-ci automatiquement lors du couplage, dans lequel le connecteur femelle (10) comprend une partie avant (11) présentant des moyens pour le couplage avec le connecteur mâle (30) et une partie arrière (12) présentant la soupape antiretour (15), et la partie avant (11) est assemblée de façon amovible à la partie arrière (12) fixement mais en offrant cependant une contrainte de traction prédéterminée, **caractérisé en ce que** la partie avant (11) est assemblée à la partie arrière (12) au moyen d'un aimant permanent (27).

2. Couplage selon la revendication 1 ou 2, **caractérisé en ce que** les moyens pour assembler la partie avant (11) au connecteur mâle (30) comprennent un assemblage à baïonnette ou un assemblage vissé.

3. Couplage selon l'une quelconque des revendications précédentes, **caractérisé en ce que** la soupape antiretour (35) du connecteur mâle (30) et/ou la soupape antiretour (15) du connecteur femelle (10) sont respectivement munies d'un corps de fermeture (16, 36) déplaçable axialement, qui est déplaçable contre l'action d'une force de rappel d'un état de fermeture obturant hermétiquement l'ouverture d'écoulement (18, 38) de la partie de couplage respective (10, 30) à un état d'ouverture libérant l'ouverture d'écoulement (18, 38), dans lequel les corps de fermeture (16, 36) sont configurés de telle manière que, lors du couplage du connecteur femelle (10) avec le connecteur mâle (30), ils se déplacent mutuellement dans l'état d'ouverture respectif, avec libération d'un chemin d'écoulement entre les conduites couplées, mais se déplacent cependant automatiquement dans leur état de fermeture lors de la séparation du connecteur femelle (10) du connecteur mâle (30) ou lors de la séparation de la partie arrière (12) de la partie avant (11) du connecteur femelle.

4. Couplage selon l'une quelconque des revendications précédentes, **caractérisé en ce qu'**un élément d'étanchéité est disposé sur la partie avant (11) et/ou sur la partie arrière (12) du connecteur femelle (10) pour réaliser un assemblage étanche au gaz avec l'autre partie respective (12, 11) du connecteur femelle.
